# EUROPEAN PATENT APPLICATION

(11) **EP 4 696 128 A1**
(43) Date of publication of application: **18.02.2026**
(21) Application number: 25194096.1
(22) Date of filing: 05.08.2025
(51) Int. Cl.: A01D 41/127, A01D 43/08

(54) **HARVESTING MACHINE MONITORING**

(30) Priority: 14.08.2024 GB 202412008
(71) Applicant: AGCO International GmbH, 8212 Neuhausen am Rheinfall (CH)
(72) Inventor: LAURSEN, Morten Stigaard, 8930 Randers (DK); Galsgaard, Bo, 8930 Randers (DK); Christensen, Albert Daugbjerg, 8930 Randers (DK)
(74) Representative: AGCO Intellectual Property Department

(57) **Abstract**

A system for monitoring one or more crop properties of crop material processed by an agricultural machine. The system includes a hybrid sensor unit which, within a single sensor arrangement, provides both an optical sensor and an event-based sensor. Each sensor is configured to be used to determine respective first and second (optionally different) crop properties which in turn can be used for controlling operation of one or more operable components of or otherwise associated with the agricultural machine.

## Description

### CROSS-REFERENCE TO RELATED APPLICATIONS

Not applicable.

### FIELD

Embodiments of the present disclosure relate generally to systems for monitoring crop properties of crop material processed by an agricultural machine.

### BACKGROUND

Some agricultural machines may be utilised for a number of different purposes. A forage harvester, for example, may be utilised to harvest different crop types, which may include grain crops and grass crops, for instance.

It is known to provide optical sensing system on harvesting machines for analysing harvested crop material. This may include monitoring a condition of grain-like material (e.g. kernels), which may relate to a level of processing applied to the crop material by the machine, and/or crop disease or other issue identification. Additionally, the optical systems may be used to identify the presence of material other than grain in the collected crop material relating to the yield or efficiency of the harvesting operation.

Typically, monitoring of kernel or grain crop material requires a small area of observation with a high image quality for analyzing the individual crop components. Conversely, for monitoring a length of cut, for example, of grass-type crops, a larger field of view (or the analysis of multiple consecutive images) may be required, and there may be less emphasis on the resolution of the obtained sensor data. For at least these reasons, a camera based system which is used to analyse grain like crop material may not be useable for monitoring certain crop parameters, such as length of cut.

Accordingly, there is a need for a system which may allow for monitoring of crop properties in multiple different use cases.

### BRIEF SUMMARY

In an aspect of the invention there is provided a system for monitoring one or more crop properties of crop material processed by an agricultural machine, the system comprising: a hybrid sensor unit which, within a single sensor arrangement, provides both an optical sensor and an event-based sensor and is configured to be mounted or otherwise coupled, in use, for imaging crop material within the agricultural machine; and one or more controllers, collectively configured to: receive optical sensor data from the optical sensor of the hybrid sensor unit; analyse the optical sensor data to determine, for crop material processed by the machine, a first crop property; and receive event sensor data from event based sensor of the hybrid sensor unit; analyse the event sensor data to determine, for crop material processed by the machine, a second crop property; and generate and output one or more control signals for controlling operation of one or more operable components of or otherwise associated with the agricultural machine in dependence on the first and/or second crop property(ies).

Advantageously, the present solution provides a hybrid sensor unit which provides both an optical and an event based sensing capability, enabling the determination of two crop properties with a single sensor. This may be particularly beneficial, for example, for use in a harvesting machine which may be configured, in use, for the harvesting of two (or more) different crop types, with each sensing capability being potentially better suited to one type of crop compared with another. In one example, this may include a forage harvester which may be configured for harvesting (and optionally processing) both grass crop and grain crop material. In further examples, the multiple sensing capabilities may provide a better measure or determination of one or more crop properties of a single crop type. Having both sensing capabilities in a single sensor unit may also be comparatively cheaper compared with providing two separate sensors.

When used herein and throughout the term "event based sensor" or sensor with "event based sensing capability" is intended to include a sensor having multiple individual sensing elements or pixels which are individually triggerable in dependence on one or more variations in the signal output associated with those elements. The one or more variations result from a change in the light incident on said sensing elements, resulting in a change in amplitude in the output signal of those sensing elements. By setting relevant thresholds for said variations, "events" can be triggered in dependence on a given change in incident light on said sensing elements. Such a change may indicate movement in the observed environment, for example. Such sensor types may also be referred to as a neuromorphic camera, a silicon retina or dynamic vision sensor.

The one or more controllers may be configured to determine the first crop property in dependence on both the optical sensor data and the event sensor data. The one or more controllers may be configured to determined the second crop property in dependence on both the event sensor data and the optical sensor data. For example, the event sensor data may be utilised to analyse the optical sensor data. This may include using the event sensor data to at least partly correct one or more image defects or artefacts in the optical sensor data. The optical sensor data may be utilised to analyse the event sensor data. This may include using the optical sensor data to identify (e.g. categorize) crop material components in the event sensor data.

The optical sensor data may comprise image data from the optical sensor of the hybrid sensor unit. The one or more controllers may be configured to receive and analyse the image data to identify crop material components within the image data. This may include the one or more controllers being configured to perform an object recognition process on image data received from the optical sensor data for identifying individual crop material components within the image data, and optionally identifying one or more properties thereof following the identification. The one or more crop material components may comprise grain or kernel components.

The first crop property may include a measure of one or more dimensions of the identified crop material components. The crop size measure may relate to a length, width, shape, surface area or estimate of a volume of the identified crop material components, for example.

The first crop property may comprise a crop condition metric indicative of a condition of one or more crop components. The condition metric may correlate to a level or processing of the crop material. Where the crop material comprises grain-like or material, the first crop property may comprise an indication of whether the material component(s) is crushed, cracked or the like.

The first crop property may comprise a measure of yield associated with the agricultural operation. This may comprise a measure of the proportion of material components present within the optical sensor data which are "desired" components, which is grain, kernels or the like, compared with material other than grain, weeds, weed seeds or other material. This may be calculated, utilising the one or more controllers, as a percentage coverage of the field of view of the hybrid sensor unit corresponding to identified desired material components, or a count of such particles.

The one or more controllers may be configured to apply a clustering process to the event sensor data. The clustering process may be applied to the event sensor data to identify and associate triggers at multiple sensing elements of the event based sensor of the hybrid sensor unit. The one or more controllers may be configured to identify one or more material components in dependence on the associated sensing element triggers. This may, for example, include associating sensing element triggers which occur substantially simultaneously, and/or for sensing elements which trigger which are proximal to one another. For instance, the clustering process may comprise a timewise and/or location based clustering process to identify and associate the sensing elements triggered by a common material component.

The one or more controllers may be configured to determine a measure of a length, size or shape associated with an identified material component. This may, for instance, comprise a count of the number of adjacent and associated sensing elements for a given material component. This may comprise a calculated distance, within the sensor data, between two or more associated sensing elements. The one or more controllers may be configured to compare the determined length or size with a threshold length or size. The threshold length or size may comprise a predetermined threshold length or size, which may be programmable, for example, to distinguish between different material component types in the monitored material flow. The one or more controllers may be configured to categorize the identified material component as a crop material component in dependence on the comparison of the determined length or size measure with the threshold length or size.

In embodiments, the one or more controllers may be configured to categorize the identified material component as a grain material component in dependence on the determined length or size measure being less than a predetermined expected or maximum length or size. Conversely, material components having a determined length or size greater than a threshold size may in some instances and use cases be classified as grass crop components. In such embodiments, the second crop property may relate to a measure of a length of cut associated with a cutting apparatus of the agricultural machine, for instance, or a measure of a crop condition associated with a "straightness" or other quantifiable measure of the crop condition. Such an arrangement may be particularly suited to implementation in a forage harvester, for example, where forage crops in the form of grasses etc. may be cut and processed, and a measure of the operation of that forage harvester be determined from the second (and optionally first) crop property in the manner discussed herein.

The second crop property may comprise a measure of a speed associated with one or more of the identified grain components. The one or more controllers may be configured to compute an average speed of identified grain components within the sensor data. The speed may provide information relating to an unload rate of the grain material, for example, where the event-based sensor is mounted at or proximal to the unloading mechanism, such as a discharge spout or unloading auger of the machine.

The second crop property may comprise a measure of a velocity or an acceleration or deceleration associated with one or more identified material components within the sensor data. A characteristic acceleration may be indicative of a crop material type or unload/discharge rate, for example.

The one or more controllers may be configured to analyse the event sensor data over time to track movement of individual crop components through a sensing region associated with the event-based sensor. In this way, even where the length or size of material component(s) is greater than one or more dimensions of the sensing region, the controller(s) are able to determine the length or size of the crop component.

The one or more controllers may be configured to control application of a filter to the output signals from individual sensing elements of the event based sensor, e.g. to remove triggers thereof due to background motion. For example, this may be due to the relative movement of the ground causing changes in the light incident on the sensing elements as the machine performs a task, or due to structural vibration and/or component motion during said tasks. Advantageously, applying one or more filters to the analogue output signal from the sensing elements may control the number of individual triggers to be processed by the event based sensor and/or one or more processing units associated therewith.

Additionally or alternatively, the one or more controllers may be configured to apply a filter to the event sensor data. Where the processing capabilities of the controllers is high enough it may be possible to receive all triggers and apply said filter(s) digitally to remove or discard unwanted triggers.

The filter may comprise a threshold for a signal parameter associated with the sensing elements, which may include amplitude or rate of change of amplitude of the output signal. The threshold may be definable and/or be dependent on the agricultural task (to be) performed by the agricultural machine.

The filter may be dependent on a ground speed of the agricultural machine and/or an operational speed of one or more components of or associated with the machine. The filter may be dependent on the crop material type. For instance, grain material may move at a different speed to non-grain material in the event sensor data, and as such a speed based filter may be applied to focus on either material type in the event sensor data.

The hybrid sensor unit may be configured to be coupled, in use, to the agricultural machine at or proximal to a crop flow associated with the machine. Where the agricultural machine comprises a harvesting machine, the hybrid sensor unit may be configured to be coupled, in use, with a sensing region which encompasses a crop flow in a discharge spout or unloading mechanism of the harvesting machine.

The one or more controllers may be configured to compare the first and/or second crop property with an expected first/second crop property. The expected first and/or second crop property may be dependent on one or more controllable operating conditions of a crop processing component of the agricultural machine. For instance, an expected speed of the crop material components may be dependent on an operating speed of crop processing apparatus of the machine. An expected speed of the crop material components may be dependent on an operating speed of an unloading or discharge system of the machine. The one or more controllers may be configured to generate and output the control signal for controlling the operable component(s) in dependence on the comparison.

The one or more operable components may include one or more components of or otherwise associated with a crop processing apparatus (or "processor") of the agricultural machine. The one or more controllers may be configured to control one or more operational parameters of the crop processing apparatus to adjust a level of processing applied thereby to crop material passing through the crop processing apparatus.

The one or more controllers may be configured to adjust one or more operational parameters of the crop processing apparatus to increase a level of processing applied to the crop material by the crop processing apparatus. This may be controlled in dependence on the first and/or second crop property being indicative of a need to increase processing - e.g. to crack or crush kernel material components for grain like crop, or to further work or condition grass crop. The one or more controllers may be configured to adjust one or more operational parameters of the crop processing apparatus to decrease a level of processing applied to the crop material by the crop processing apparatus. Here this may be in dependence on the first and/or second crop property being indicative of a need to reduce conditioning or processing of the crop material, e.g. where there is excessive crushing/cracking of the crop material, or over conditioning of grass crop for example.

The one or more operable components may include a processor roller or rollers. The one or more controllers may be configured to adjust a roller gap and/or roller speed associated with the processor roller(s) in dependence on the determined first and/or second crop property. This may advantageously increase or decrease a level of processing applied to gathered crop by the agricultural machine by adjusting a level of mechanical force applied by the roller(s) as the crop material passes through the crop processing apparatus of the machine. This may be particularly advantageous for grain-like crop material, where the roller gap and/or speed may directly impact the level of cracking/crushing of the crop material.

The one or more operable components may include a cutting apparatus. The one or more controllers may be configured to adjust one or more operable parameters of the cutting apparatus, which may include an operational speed or position of one or more cutting members of the cutting apparatus. Where the second crop property corresponds to a measure of a length or size of crop material components in the event sensor data, the one or more controllers may be configured to adjust a length of cut applied to gathered crop material in dependence on the second crop property.

The one or more operable components may include a guidance system for the agricultural machine. The guidance system may be operable to control a direction of travel and/or forward (or backward) speed of the agricultural machine. The one or more controllers may be configured to control a forward speed of the agricultural machine in dependence on the first and/or second crop property. Advantageously, adjusting the forward speed of the machine may in turn control a feed speed of crop material into a crop processing apparatus or other working components of the machine, thereby adjusting a level of processing applied by such components.

The one or more operable components may include a header or other intake for the agricultural machine. The one or more controllers may be configured to control operation of the header or one or more components thereof in dependence on the first and/or second crop property, e.g. to control a feed rate, profile, or the like of crop material into the agricultural machine or crop processing components thereof. This may include controlling operation of one or more feed elements, cutting elements, transfer elements or the like.

The one or more operable components may include an accelerator assembly for the agricultural machine. The accelerator assembly may be configured for applying a propulsive force to collected crop material for distribution by an unloading spout of the machine, for example. The one or more controllers may be configured to adjust an operational speed of the accelerator assembly in dependence on the first and/or second crop property.

The one or more operable components may include a user interface. The user interface may, for example, comprise a display terminal of the agricultural machine. The user interface may comprise a user device, such as a smartphone or tablet computer, for example. The one or more controllers may be configured to control operation of the user interface, e.g. by controlling display of a graphical representation thereon indicative of the determined first and/or second crop property(ies). In an at least partly automated system, the graphical representation may be provided for information purposes to inform an operator of the machine of automated adjustments made, for example, to crop processing apparatus of the agricultural machine in dependence on the determined crop property(ies). In other embodiments the one or more controllers may be configured to provide one or more instructions or suggested adjustments to operational setting(s) associated with the machine and/or components thereof. This may include suggested adjustments to a forward speed of the machine, a processing intensity associated with the crop processing apparatus of the machine, or the like, for example.

The one or more controllers may collectively comprise an input (e.g. an electronic input) for receiving one or more input signals. The one or more input signals may comprise the optical sensor data and/or the event sensor data. The one or more controllers may collectively comprise one or more processors (e.g. electronic processors) operable to execute computer readable instructions for controlling operational of the control system, for example, to determine the first and/or second crop property(ies). The one or more processors may be operable to generate one or more control signals for controlling operation of the one or more operable components. The one or more controllers may collectively comprise an output (e.g. an electronic output) for outputting the one or more control signals.

In another aspect, there is provided a crop processing system for an agricultural harvesting machine, the crop processing system comprising a system as described herein; with the hybrid sensor unit operably coupled, in use, to the agricultural harvesting machine for obtaining the optical sensor data and the event sensor data.

A further aspect provides an agricultural harvesting machine comprising the system or crop processing system according to any preceding aspect described herein. The agricultural harvesting machine may optionally comprise a forage harvester.

Within the scope of this application it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a simplified cross-sectional side view illustrating an agricultural harvesting machine embodying aspects of the present disclosure;
FIG. 2A is an example image obtained from event sensor data illustrating movement of a straw like crop component moving through a field of view of the hybrid sensor unit;
FIGs. 2B and 2C are example images obtained from optical sensor data illustrating the presence of a crop component within the image(s); and
FIG. 3 is a schematic diagram of a control system of the present disclosure.

### DETAILED DESCRIPTION

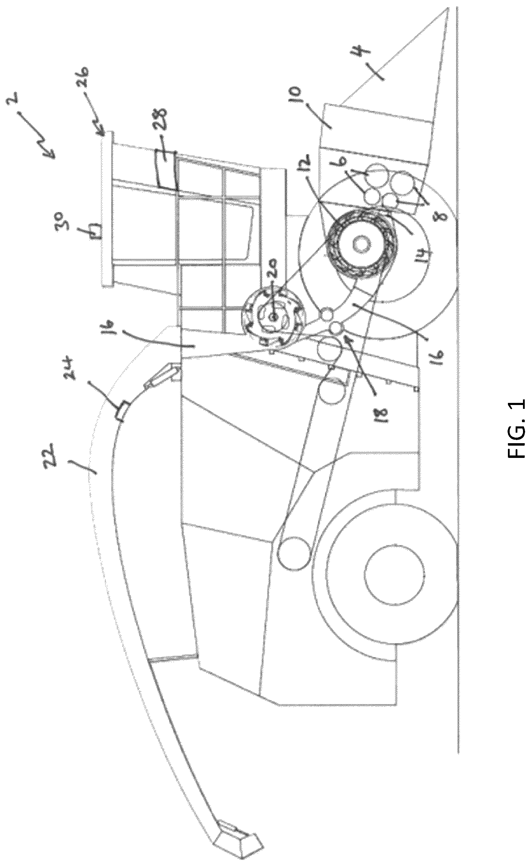

The present disclosure relates to a system 100 for monitoring one or more crop properties of crop material processed by an agricultural machine, which in the illustrated embodiment takes the form of a harvesting machine, and specifically a forage harvester 2. A hybrid sensor unit 24 is operably coupled, in use, to the forage harvester 2, specifically here within or adjacent to a crop flow through an unloading spout 22 of the harvester 2. The sensor unit 24 is shown in FIG. 1 within the unloading spout 22 and on a lower surface thereof. However, it will be appreciated that this position is provided by way of example only. For example, the sensor unit 24 may be provided on an upper inner surface of the unloading spout 22 or located outside of the unloading spout 22 with a viewing window or other aperture provided within the unloading spout 22 for sensing crop material passing therethrough.

As discussed herein, the hybrid sensor unit 24 comprises, within a single sensing arrangement both an optical sensor and an event based sensor. The hybrid sensor unit 24, and specifically the optical sensor thereof, is configured to obtain optical sensor data indicative of material within the unloading spout 24 of the harvester 2. This can be utilised, as discussed herein, in some use cases to determine a first crop property for material passing through the spout 22. The hybrid sensor unit 24, and specifically the event based sensor thereof, is configured to obtain event sensor data indicative of material within the unloading spout 24 of the harvester 2. Similar to the optical sensor data, the event sensor data can be utilised in some use cases to determine a second crop property for material passing through the spout 22. The first and second crop properties may provide information relating to the operation of the harvester 2, e.g. how well the harvester 2 and specifically crop processing components of the harvester 2, such as a header 4, chopper drum 12, rollers 6, 8 are working the crop, and/or the crop being collected by the machine, e.g. relating to yield or crop quality metric, for instance. The present disclosure extends to controlling operation of one or more operable components of or otherwise associated with the forage harvester 2 based on the determined first and/or second crop property, e.g. utilising a user interface (e.g. display terminal 28 of the forage harvester 2) to display a graphical representation of the crop property(ies), suggested adjustments to the crop processing apparatus operational settings or the like, or to at least partly automate adjustments to the forage harvester operation, as discussed in detail herein.

### Harvester

FIG 1 illustrates an agricultural harvesting machine in the form of a forage harvester 2. The forage harvester 2 is provided with a front attachment, here a header 4 comprising cutting equipment for cutting and harvesting a crop from a working environment. The cut crop is fed from the header 4 via associated feed rollers 6, 8 in a housing 10 to a chopper drum 12 where the crop is chopped into smaller pieces between the chopper drum 12 and an associated shear bar 14. The chopped crop passes through a duct 16 and is optionally directed into a cracker unit 18 where the crop is further crushed and threshed. The chopper drum 12, shear bar 14, cracker unit 18 and other associated components may herein be referred to collectively as the crop processing apparatus of the forage harvester 2. The processed crop is then blown upwards along the duct 16 by an accelerator 20 and exits through a spout 22 directing the processed crop into a trailer or other vehicle moving alongside the forage harvester 2, as will be appreciated.

The forage harvester 2 is further provided with an operator's cab 26. A user interface in the form of a display terminal 28 is located within the operator's cab 26 to communicate information to the operator regarding the operation of the forage harvester 2, and specifically under control of the system 100 in the manner discussed herein for communicating information to the operator regarding the operational state of the system 100, the crop processing apparatus, etc. In alternative embodiments, the user interface may instead be provided on a portable electronic device carried by the operator, such as a smart phone or tablet computer utilising application software stored or otherwise accessible by the remote user device.

### Operational Use

As discussed herein, the present disclosure provides a system 100 which is configured to provide sensor data from a hybrid sensor unit for use in determining a first and/or second crop property for material being processed by a forage harvester 2, and more particularly the crop processing apparatus of the harvester 2.

The hybrid sensor unit 24 provides a first sensor in the form of an optical sensor configured for obtaining image data for crop material passing through the unloading spout 22. The image data is able to be analysed for determining a first crop property for that material. For instance, the image data may be analysed to identify crop material components within the image data. This may include performance of an object recognition process on image data received from the optical sensor data. This may be used, for instance, to identify grain or kernel components within the image data.

Once identified, a first crop property may be determined which includes a measure of one or more dimensions of the identified crop material components. This can relate to a length, width, shape, surface area or estimate of a volume of the identified crop material components, for example. The size or shape of the identified crop material components may be indicative of a condition or crop quality, for example. The condition or quality of the crop may directly correlate to a level of processing of the crop material where the dimensions or shape of crop components may provide an indication of whether the material component(s) is crushed, cracked or the like - e.g. whether it has been adequately processed by the crop processing components of the harvester 2.

Additionally or alternatively, the first crop property may include a measure of yield associated with the agricultural operation, which can include for instance a measure of the proportion of material components present within the optical sensor data which are "desired" components, that is grain, kernels or the like, compared with material other than grain, weeds, weed seeds or other material. This may be calculated as a percentage coverage of the field of view of the hybrid sensor unit corresponding to identified desired material components, or a count of such particles within a given image obtained by the optical sensor.

The determined first crop property can be used to inform either an assisted or semi-automated system for the harvester 2, e.g. informing an operator of the machine of a crop condition or estimated yield, and optionally prompt the operator to adjust operational settings of the harvester 2 to improve on said factors.

In an assisted system, a user interface, such as display terminal 28 can be used to inform the operator of either the crop property directly, or one or more recommended adjustments to be made to the harvester 2 settings.

In a fully automated system, operational settings of the harvester 2 or components thereof may be adjusted accordingly. Example operational settings may include settings for a crop processing apparatus (or "processor") of the harvester 2. Specifically here this relates to the cracker unit 18 and one or more rollers thereof. Operational parameters of the cracker unit 18 may be controlled to adjust a level of processing applied thereby to crop material passing therethrough. This includes adjustment of a roller gap and/or roller speed associated with the roller(s) in dependence on the determined crop processing metric. This advantageously increases or decreases a level of processing applied to gathered crop by the forage harvester 2 by adjusting a level of mechanical force applied by the roller(s) as the crop material passes through the cracker unit 18. It may be advantageous to adjust said processing level dependent on the first crop property, e.g. where the crop condition is considered to correspond to under or over processed crop. For a kernel crop, such as corn, this may relate to a proportion of the kernels which are crushed or cracked in the image data, which may directly feed into any adjustments required in the processing level to reach a desired level.

Further operable components and suitable adjustments thereof are also within the scope of the present disclosure, as will be appreciated, and as is discussed herein. For instance, an intake speed may be controlled to increase or reduce the crop material flow through the crop processing components of the harvester 2. This, in turn, may have a direct effect on the level of processing applied, the yield realised and the level of additional, non-grain material processed / present in the crop sample, for example.

The hybrid sensor unit 24 additionally provides a second sensor in the form of an event based sensor configured for obtaining event sensor data for crop material passing through the unloading spout 22. The event based sensor has multiple individual sensing elements (pixels) which are individually triggerable in dependence on one or more variations in the signal output associated with those elements. The one or more variations result from a change in the light incident on said sensing elements, resulting in a change in amplitude in the output signal of those sensing elements. By setting relevant thresholds for said variations, "events" can be triggered in dependence on a given change in incident light on said sensing elements. The variations can be used as an indication of movement in the observed environment, for example, by monitoring successive triggers of adjacent sensing elements, and inferring movement in the observed scene based thereon. This is used in the present disclosure to identify and track crop material components, e.g. straw components, passing through a sensing region of the event based sensor, and in some examples determine a length or size of said components. Specifically, in the present case, a clustering process may be applied to the event sensor data. This clustering may be a timewise and/or location based clustering to identify triggers at multiple sensing elements which correlate to the same physical observation. For instance, data may be clustered timewise to identify (and optionally track movement of) individual material components (e.g. pieces of straw or other crop material) in the sensor data.

The event sensor data is able to be analysed for determining a second crop property for that material. For instance, the event sensor data may be analysed to identify crop material components within the sensor data, e.g. in a manner discussed herein, by identifying adjacent trigger pixels / sensing elements corresponding to a single crop component. This may advantageously allow for the determination or identification of crop components which have a dimension which is greater than the field of view of the event sensor, as the components can be tracked as they pass through the image by monitoring successive triggers of adjacent sensing elements thereof. This makes the event sensor data particularly suited to identify and monitoring grass crop, for example, and more particularly straw length - corresponding to a length of cut provided by the machine 2.

Once identified, the second crop property may then be determined which in the illustrated embodiment includes a measure of a length of the identified crop material components. As discussed, the length of the identified crop components may directly indicate the cutting length provided by the cutter components of the harvester 2, such as the chopper drum 12.

This may be compared, for example, with a threshold length to confirm that the observed cutting length is as expected from the harvester settings. This may be done for each identified component, for example. In an extension to this, the system may be configured to analyse uniformity of cut, e.g. across multiple identified components, again optionally compared with a target or expected cut length.

As with the first crop property, the determined second crop property can then be used to inform either an assisted or semi-automated system for the harvester 2, e.g. informing an operator of the machine of an observed length of cut for the crop material, and optionally prompt the operator to adjust operational settings of the harvester 2 to improve on said factors.

In an assisted system, a user interface, such as display terminal 28 can be used to inform the operator of either the second crop property directly, or one or more recommended adjustments to be made to the harvester 2 settings.

In a fully automated system, operational settings of the harvester 2 or components thereof may be adjusted accordingly. Example operational settings may include settings for the header 4, and/or the chopper drum 12 of the harvester 2. This may include adjusting a position, speed, or other operational settings of such components to adjust a target cutting length for the crop material. This may include, for example, a header cutter bar position, an operational speed for the chopper drum 12, a feed rate for material through such components, and many more settings as will be readily appreciated by the skilled person for adjusting the cutting length.

### Sensor Data

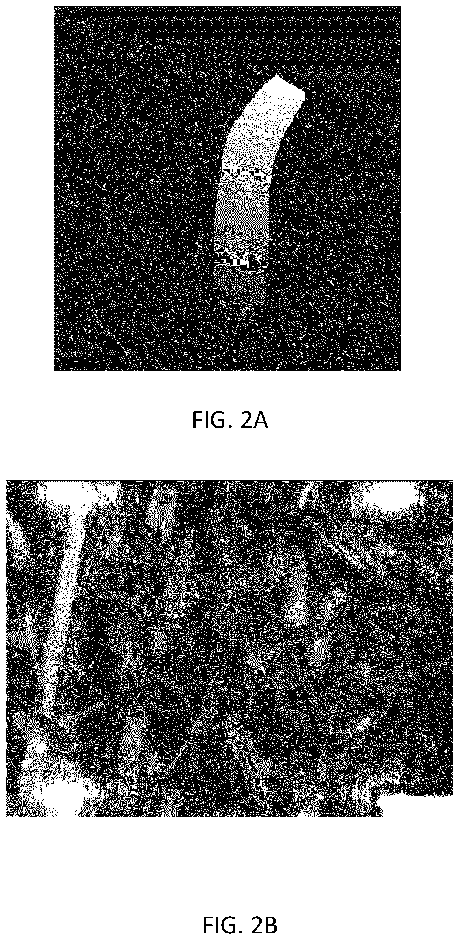

FIGs. 2A - 2C illustrate sensor data obtained by the hybrid sensor unit.

In FIG 2A, event sensor data is illustrated figuratively, showing a time surface illustrating triggers of the event sensor sensing elements over time in greyscale. Here, black corresponds to no recent triggers within a given time, full white corresponding to the most recent triggers and intermediate greyscale values which demonstrate a "decay" of the sensor data - i.e. a time since triggering of the associated sensing elements. It can be seen here how an elongate crop component, such as a straw component can be tracked through the sensing data from the event based sensor, whereas other crop characteristics such as crop type, maturity, colour etc. may be more difficult to ascertain from the event based sensor data.

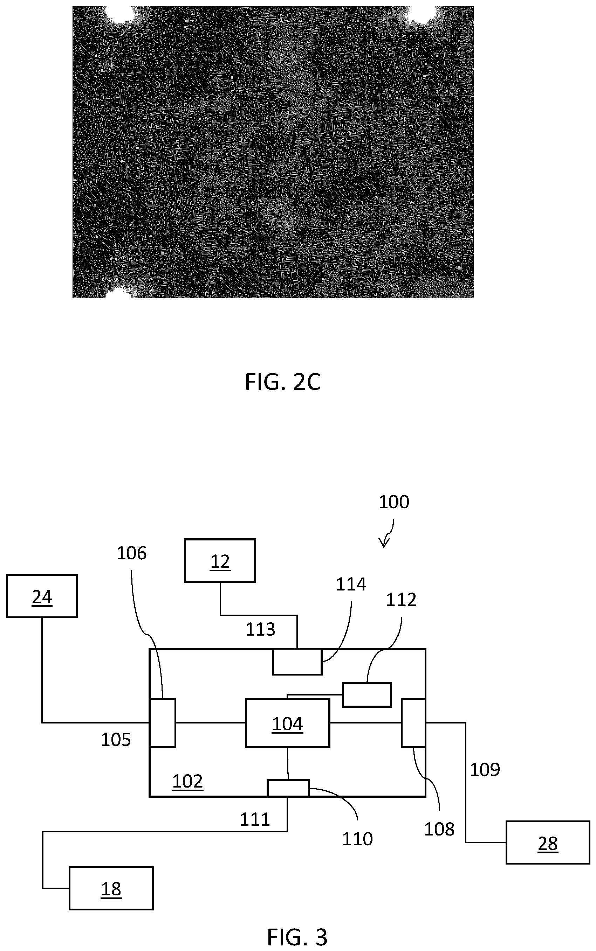

In FIG. 2B an image is provided from optical sensor data from the hybrid sensor unit. Here, the image is of a grass crop and illustrates how a whole grass crop may not fit within the field of view of the optical sensor, making it difficult to obtain a measure, for example, of the straw/cut length for the grass crop. Conversely, the optical sensor data instead provides an ability to determine further crop properties, such as a colour, size and/or shape of other crop material, such as processed kernels and the like, which may not be possible from the event based sensor data, only. This is illustrated in the image shown in FIG 2C, with corn crop components.

As shown, the hybrid sensor unit forming part of aspects described herein can advantageously provide relevant information for different crop types, in different operating conditions for the forage harvester.

### Control System

FIG 3 illustrates an embodiment of a system 100 of the present disclosure. As discussed herein, the system 100 comprises a controller 102 operably connected to the hybrid sensor 24. The control system 100 is configured for controlling one or more operable components 12, 28, 18 associated with the harvester 2 in the manner discussed herein. In the illustrated embodiment, the controllable operable components include the cracker unit 18 of the harvester 2 for controlling level of processing applied to the crop, as is discussed herein, the chopper drum 12 (or a local control unit thereof) of the harvester 2 and a user interface 28 associated with the harvester 2, which as discussed is provided as a display terminal 28 in the operator cab 26 of the harvester 2 to provide a graphical representation illustrative of the operation of the system 100, again as discussed herein.

Control system 100 comprises a controller 102 having an electronic processor 104, an electronic input 106and electronic outputs 108, 110, 114. The processor 104 is operable to access a memory 112 of the controller 102 and execute instructions stored therein to perform the steps and functionality of the present disclosure discussed herein, e.g. by controlling the display terminal 28 to provide the graphical representation, and/or controlling operation of operable components, e.g. cracker unit 18 or chopper drum 12.

The processor 104 is operable to receive sensor data from the hybrid sensor 24 via input 106 which, in the illustrated embodiment, takes the form of input signals 105. The data is indicative of the optical sensor data from the optical sensor of the hybrid sensor 24, and/or event sensor data from the event based sensor of the hybrid sensor 24.

The processor 104 is configured to analyse the sensor data from the optical sensor and/or the event based sensor in the manner discussed herein, and determine therefrom any necessary adjustment in the operational state of one or more operable components of or otherwise associated with the harvester 2, e.g. the cracker unit (or components thereof) for adjusting a level of processing applied thereby, and/or the chopper drum 12 (or components thereof) for adjusting a cutting applied to the crop material, etc. This is based on the first and/or second crop property(ies) as determined in the manner discussed hereinabove.

Controller 102 includes an electronic output 110 configured to output control signals 111 generated by the processor 104 for controlling operation of the cracker unit 18. Specifically, processor 104 is operable to generate, and the controller 102 operable to then output via output 1110, control signals 111 to the cracker unit 18 or a local control unit thereof for controlling operable components thereof, specifically here a roller setting of the cracker unit 18, which can include a displacement setting for one or more rollers thereof, or an operational speed of the rollers, for instance.

Controller 102 additionally includes an electronic output 114 configured to output control signals 113 generated by the processor 104 for controlling operation of the chopper drum 12 (or components thereof). Specifically, processor 104 is operable to generate, and the controller 102 operable to then output via output 114, control signals 113 to the chopper drum 12 or a local control unit thereof for controlling operable components thereof, specifically here an operational position and/or speed of components of the drum 12, for instance, for adjusting a cutting applied to the crop material - e.g. to adjust a length of cut of the processed crop material.

Output 108 is operably coupled to the display terminal 28. Control system 100 is operable to control operation of the display terminal 28 e.g. through output of control signals 109 in order to display data to an operator of the harvester 2 relating to the operation of the system 100. Specifically, the system 100 is operable to control the display terminal 28 to display to the operator a representation of the first and/or second crop property to an operator of the harvester 2. This may be used, for example, by an operator of the harvester 2 to make additional manual adjustments to the harvester settings as deemed necessary.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. A system for monitoring one or more crop properties of crop material processed by an agricultural machine, the system comprising:
a hybrid sensor unit which, within a single sensor arrangement, provides both an optical sensor and an event-based sensor, and is configured to be mounted or otherwise coupled, in use, for imaging crop material within the agricultural machine; and
one or more controllers, collectively configured to:
receive optical sensor data from the optical sensor of the hybrid sensor unit;
analyse the optical sensor data to determine, for crop material processed by the machine, a first crop property;
receive event sensor data from event based sensor of the hybrid sensor unit;
analyse the event sensor data to determine, for crop material processed by the machine, a second crop property; and
generate and output one or more control signals for controlling operation of one or more operable components of or otherwise associated with the agricultural machine in dependence on the first and/or second crop property(ies).

2. A system of claim 1, wherein the one or more controllers are configured to:
determine the first crop property in dependence on both the optical sensor data and the event sensor data; and/or
determine the second crop property in dependence on both the event sensor data and the optical sensor data.

3. A system of claim 1 or claim 2, wherein the optical sensor data comprises image data from the optical sensor of the hybrid sensor unit; and wherein the one or more controllers are configured to receive and analyse the image data to identify crop material components within the image data.

4. A system of any preceding claim, wherein the first crop property:
includes a measure of one or more dimensions of the identified crop material components;
comprises a crop condition metric indicative of a condition of one or more crop components, the crop condition metric correlating to a level or processing of the crop material; and/or
comprises a measure of yield associated with the agricultural operation.

5. A system of any preceding claim, wherein the one or more controllers are configured to apply a clustering process to the event sensor data to identify and associate triggers at multiple sensing elements of the event based sensor of the hybrid sensor unit; and wherein the one or more controllers are configured to identify one or more material components in dependence on the associated sensing element triggers; optionally wherein the one or more controllers are configured to determine a measure of a length, size or shape associated with an identified material component in the event sensor data.

6. A system of any preceding claim, wherein the one or more controllers are configured to analyse the event sensor data over time to track movement of individual crop components through a sensing region associated with the event-based sensor.

7. A system of any preceding claim, wherein the hybrid sensor unit is configured to be coupled, in use, to the agricultural machine at or proximal to a crop flow associated with the machine; optionally wherein the agricultural machine comprises a harvesting machine, and the hybrid sensor unit is configured to be coupled, in use, with a sensing region which encompasses a crop flow in a discharge spout or unloading mechanism of the harvesting machine.

8. A system of any preceding claim, wherein the one or more operable components include one or more components of or otherwise associated with a crop processing apparatus of the agricultural machine; and wherein the one or more controllers are configured to control one or more operational parameters of the crop processing apparatus to adjust a level of processing applied thereby to crop material passing through the crop processing apparatus.

9. A system of any preceding claim, wherein the one or more operable components include a processor roller or rollers; and wherein the one or more controllers are configured to adjust a roller gap and/or roller speed associated with the processor roller(s) in dependence on the determined first and/or second crop property.

10. A system of any preceding claim, wherein the one or more operable components include a cutting apparatus; and wherein the one or more controllers are configured to adjust one or more operable parameters of the cutting apparatus including an operational speed or position of one or more cutting members of the cutting apparatus.

11. A system of claim 10, wherein the second crop property corresponds to a measure of a length or size of crop material components in the event sensor data, and the one or more controllers are configured to adjust a length of cut applied to gathered crop material in dependence on the second crop property.

12. A system of any preceding claim, wherein:
the one or more operable components include a guidance system for the agricultural machine operable to control a direction of travel and/or forward (or backward) speed of the agricultural machine; and the one or more controllers are configured to control a forward speed of the agricultural machine in dependence on the first and/or second crop property;
the one or more operable components include a header or other intake for the agricultural machine; and the one or more controllers are configured to control operation of the header or one or more components thereof in dependence on the first and/or second crop property; and/or
the one or more operable components include an accelerator assembly for the agricultural machine configured for applying a propulsive force to collected crop material for distribution by an unloading spout of the machine; wherein the one or more controllers are configured to adjust an operational speed of the accelerator assembly in dependence on the first and/or second crop property.

13. A system of any preceding claim, wherein the one or more operable components include a user interface; and the one or more controllers are configured to control operation of the user interface by controlling display of a graphical representation thereon indicative of the determined first and/or second crop property(ies).

14. A crop processing system for an agricultural harvesting machine, the crop processing system comprising a system of any preceding claim; wherein the hybrid sensor unit is operably coupled, in use, to the agricultural harvesting machine for obtaining optical sensor data and the event sensor data.

15. An agricultural harvesting machine comprising the system of any of claim 1 to 13, or the crop processing system according to claim 14.
